# EUROPÄISCHE PATENTSCHRIFT

(11) **EP 1 065 121 B1**
(45) Veröffentlichungstag und Bekanntmachung des Hinweises auf die Patenterteilung: **27.10.2004**
(21) Anmeldenummer: 00113316.4
(22) Anmeldetag: 23.06.2000
(51) Int. Cl.: B61C 17/12, B61L 15/00, B60L 15/32

(54) **Einrichtung zur Traktionssteuerung eines Zuges mit wenigstens zwei Fahrzeugen**
Traction control device for a train with at least two vehicles
Dispositif de commande de propulsion pour un train avec au moins deux véhicules

(30) Priorität: 28.06.1999 DE 19929599
(43) Veröffentlichungstag der Anmeldung: 03.01.2001
(73) Patentinhaber: DB Cargo AG, 55116 Mainz (DE)
(72) Erfinder: Gralla, Dietmar, Dr.-Ing., 32425 Minden (Westf) (DE); Witte, Stefan, Dr.-Ing., 32425 Minden (Westf) (DE); Heinz, Sebastian, 32423 Minden (Westf) (DE)
(74) Vertreter: Zinken-Sommer, Rainer

(56) Entgegenhaltungen:
- DE-A- 4 037 626
- LEGE B: "REGELUNG DES SELBSTTAETIG SIGNALGEFUEHRTEN TRIEBFAHRZEUGS SST MIT PARALLELER PROGRAMMVERARBEITUNG" ZEITSCHRIFT FUR EISENBAHNWESEN UND VERKEHRSTECHNIK. DIE EISENBAHNTECHNIK + GLASERS ANNALEN,DE,GEORG SIEMENS VERLAGSBUCHHANDLUNG. BERLIN, Bd. 121, Nr. 7, 1. Juli 1997 (1997-07-01), Seiten 388-395, XP000693548 ISSN: 0941-0589

## Beschreibung

Die Erfindung betrifft eine Einrichtung zur Traktionssteuerung eines Zuges mit wenigstens zwei Fahrzeugen mit den im Oberbegriff des Anspruchs 1 genannten Merkmalen.

Es ist bekannt, Züge aus mehreren Fahrzeugen zusammenzustellen, wobei innerhalb des Zuges sogenannte verteilte Antriebssysteme beziehungsweise verteilte Bremssysteme vorgesehen sind. Dies bedeutet, dass der Zug, auf die einzelnen Fahrzeuge verteilte Antriebseinheiten beziehungsweise Bremseinheiten aufweist. Zur Steuerung des Zuges werden von einem Triebfahrzeug oder Steuerwagen oder dergleichen Sollwerte für den Antrieb beziehungsweise die Bremse gegeben. Entsprechend den Sollwertvorgaben werden dann von den verteilten Antriebseinrichtungen beziehungsweise den verteilten Bremseinrichtungen entsprechende positive oder negative Beschleunigungen des Zuges ausgelöst. Ein Triebfahrzeugführer beziehungsweise eine elektronische Steuerung kann dann im Triebfahrzeug das Beschleunigen beziehungsweise Abbremsen des Zuges wahrnehmen und die Sollwertvorgaben an den verteilten Antrieb beziehungsweise an der verteilten Bremse entsprechend den Erfordernissen verändern.

Bekannt ist, die Züge mit einem Kommunikationssystem auszustatten, das einen durchgehenden Zugbus umfasst. An den Zugbus sind die einzelnen Systemkomponenten des Zuges über Fahrzeugbusse angeschlossen. Als Mittler zwischen Fahrzeugbussen und Zugbus dienen Gateways. Innerhalb des Zuges werden stellwerterzeugende Systemkomponenten und stellwertumsetzende Systemkomponenten (Aktoren) unterschieden. Die stellwerterzeugenden Systemkomponenten übernehmen eine Masterfunktion innerhalb des Zuges, während die stellwertumsetzenden Komponenten eine Slavefunktion übernehmen. Die stellwerterzeugenden Systemkomponenten können von einem Triebfahrzeugführer oder einem elektronischen Copiloten vorgegebene Sollwerte den stellwertumsetzenden Systemkomponenten zur Verfügung stellen. Diese führen daraufhin die entsprechenden Aktionen aus. Die stellwertumsetzenden Systemkomponenten sind beispielsweise die verteilten Antriebssysteme und verteilten Bremssysteme.

Bei der bekannten Einrichtung ist nachteilig, dass innerhalb des Zuges hohe längsdynamische Kräfte wirken. Entsprechend der Anordnung und Ansteuerung der verteilten Antriebssysteme beziehungsweise verteilten Bremssysteme werden über die Länge des Zuges an mehreren Stellen Antriebskräfte beziehungsweise Bremskräfte eingeleitet. Diese wirken aufgrund stochastischer Einflussgrößen, wie beispielsweise Wirkungsgrad der einzelnen Systeme, Haftwertverhältnisse zwischen Rad und Schiene sowie Reibwertverhältnisse zwischen Bremspartnern, unterschiedlich, so dass über die Länge des Zuges Abweichungen von der Sollwertvorgabe auftreten. Diese Abweichungen führen zu unterschiedlichen positiven beziehungsweise negativen Beschleunigungen einzelner Zugteile innerhalb des Zuges. Die hierdurch auftretenden längsdynamischen Kräfte müssen durch entsprechend robust aufgebaute mechanische Kupplungen abgefangen werden.

Aus DE 4037626 ist eine Einrichtung zur Traktionssteuerung eines Zuges mit wenigstens zwei Fahrzeugen bekannt, bei der jedem Slavesystem ein Traktionsregler (Längsführungsregler) zugeordnet ist, dem der Sollwert vom Mastersystem vorgebbar ist und der dem jeweiligen Aktorsystem ein Steuersignal zur Umsetzung des Sollwertes liefert, wobei das Steuersignal durch die Radsatzgeschwindigkeit als fahrzeugspezifische Messgröße abgleichbar ist. Dadurch wird erreicht, dass der Einfluss stochastischer Größen auf die Umsetzung der Sollwertvorgaben des Mastersystem kompensiert werden kann. Nachteilig an diesem bekannten System ist, dass bei inhomogen verteilten Antriebs- oder Bremskräfte i.d.R. alle Radsatzgeschwindigkeiten im gekuppelten Zugverband gleich sind und diese Messgröße demzufolge nicht geeignet ist längsdynamische Kräfte zu minimieren.

Der Erfindung liegt die Aufgabe zugrunde, eine Einrichtung der gattungsgemäßen Art zu schaffen, die einfach aufgebaut ist und die zu einer reduzierten längsdynamischen Beanspruchung des Zuges führt.

Erfindungsgemäß wird diese Aufgabe durch eine Einrichtung mit den im Anspruch 1 genannten Merkmalen gelöst.

Als fahrzeugspezifische Messgröße werden die Beschleunigung des Fahrzeuges über Grund und/oder die in und entgegengesetzt der Fahrtrichtung wirkenden Kuppelkräfte verwendet.

Durch Wahl der Beschleunigung über Grund als fahrzeugspezifische Messgröße und als Sollwertvorgabe durch das Mastersystem können für die verteilten Antriebssysteme und die verteilten Bremssysteme die gleichen physikalischen Größen verwendet werden. Hierdurch ergibt sich eine sehr vereinfachte Traktionssteuerung des Zuges.

In bevorzugter Ausgestaltung der Erfindung ist vorgesehen, dass insbesondere, wenn die Kräfte und/oder die Beschleunigung an beiden Enden des Fahrzeuges in Fahrtrichtung gemessen wird, sich die Sollwertvorgabe vom Mastersystem des Zuges exakt fahrzeugspezifisch abgleichen lässt. Somit wird sichergestellt, dass über die gemessene tatsächliche Beschleunigung über Grund des Fahrzeuges im Verhältnis zur Sollwertvorgabe durch das Mastersystem stochastische Einflussgrößen auf das jeweilige Fahrzeug sicher kompensiert werden können. So ist insbesondere möglich, beispielsweise einen Verschleiß des Antriebssystems und/oder des Bremssystems, der zu unterschiedlicher Umsetzung der Sollwertvorgabe des Mastersystems führen würde, durch die tatsächliche gemessene Beschleunigung des Fahrzeuges entsprechend nachzuregeln. So kann insbesondere bei einem Verschleiß der Bremsanlage durch eine Korrektur der Sollwertvorgabe für den Bremswert nach oben die eigentlich gewünschte Bremsbeschleunigung eingestellt werden.

In weiterer bevorzugter Ausgestaltung der Erfindung ist vorgesehen, dass das Mastersystem, das den Sollwert vorgibt, einen elektronischen Copiloten implementiert hat, der aus Vorgaben des Triebfahrzeugführers oder externen Sollvorgaben, wie insbesondere vorausfahrender Zug, Streckenprofil oder dergleichen, den Beschleunigungssollwert für die Längsführungsregelung vorgibt. Durch eine derartige Ausgestaltung wird bevorzugt erreicht, dass fahrzeugspezifische Besonderheiten bei der Sollwertvorgabe für den Zug nicht mehr zu berücksichtigen sind. Die fahrzeugspezifischen Besonderheiten werden einzeln für jedes Fahrzeug durch den Längsführungsregler kompensiert, so dass die Sollwertvorgabe für den gesamten Zug von diesem unabhängig erfolgen kann. Das heißt, die Sollwertvorgabe erfolgt nur noch entsprechend den externen Sollvorgaben beziehungsweise den, durch den Triebfahrzeugführer ausgelösten Vorgaben.

Durch die bevorzugte Einbindung der externen Vorgaben, beispielsweise von vorausfahrenden Zügen, lässt sich durch die erfindungsgernäße Einrichtung zur Traktionssteuerung ein automatisches Folgefahren von Zügen auf einer Strecke realisieren. Dadurch, dass Vorgaben eines vorausfahrenden Zuges gleichzeitig externe Vorgaben für die Traktionssteuerung des jeweiligen Zuges sind, haben diese Einfluss auf die Bestimmung des vorzugebenden Beschleunigungswertes, so dass der Zug abhängig vom vorausfahrenden Zug, beispielsweise Abstand, Geschwindigkeit oder dergleichen, entsprechende Sollwertvorgaben für den eigenen Zug erhält. Hierdurch wird eine Optimierung des Blockabstandes zwischen fahrenden Zügen möglich.

Ferner ist bevorzugt möglich, durch die erfindungsgemäße Traktionssteuerung zwischen Fahrzeugen eines Zuges eine sogenannte virtuelle Kupplung einzuführen. Diese virtuelle Kupplung, die ohne mechanische Kupplung auskommt, lässt eine einfache Reihung von Fahrzeugen zu einem Zug beziehungsweise mehreren Zügen zu. Da durch die vorgesehene Längsführungsregelung die Summe der längsdynamischen Kräfte zwischen aufeinanderfolgenden Fahrzeugen auf Null regelbar ist, kann auf die mechanische Kupplung verzichtet werden. Durch die Umsetzung der Sollwertvorgaben des Beschleunigungssignals in den Längsführungsreglern lässt sich gleichzeitig ein aufeinander abgestimmtes Beschleunigen beziehungsweise Abbremsen der einzelnen Fahrzeuge des Zuges erreichen, so dass ohne mechanische Kupplung eine Bewegung der Fahrzeuge im Zugverband möglich ist. Indem das vorausfahrende Fahrzeug gleichzeitig ein Korrektursignal für das nachfolgende Fahrzeug liefert, kann der entsprechende Längsführungsregler - unter Berücksichtigung der fahrzeugspezifischep stochastischen Einflussgrößen, zum Beispiel Verschleiß, Haftwertverhältnisse oder dergleichen - eine Korrektur des jeweiligen vorgegebenen Beschleunigungssignals durchführen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- **Figur 1**: eine schematische Darstellung eines Zuges;
- **Figur 2**: an einem Fahrzeug angreifende Längskräfte und
- **Figur 3**: ein Blockschaltbild einer Traktionssteuerung des Zuges.

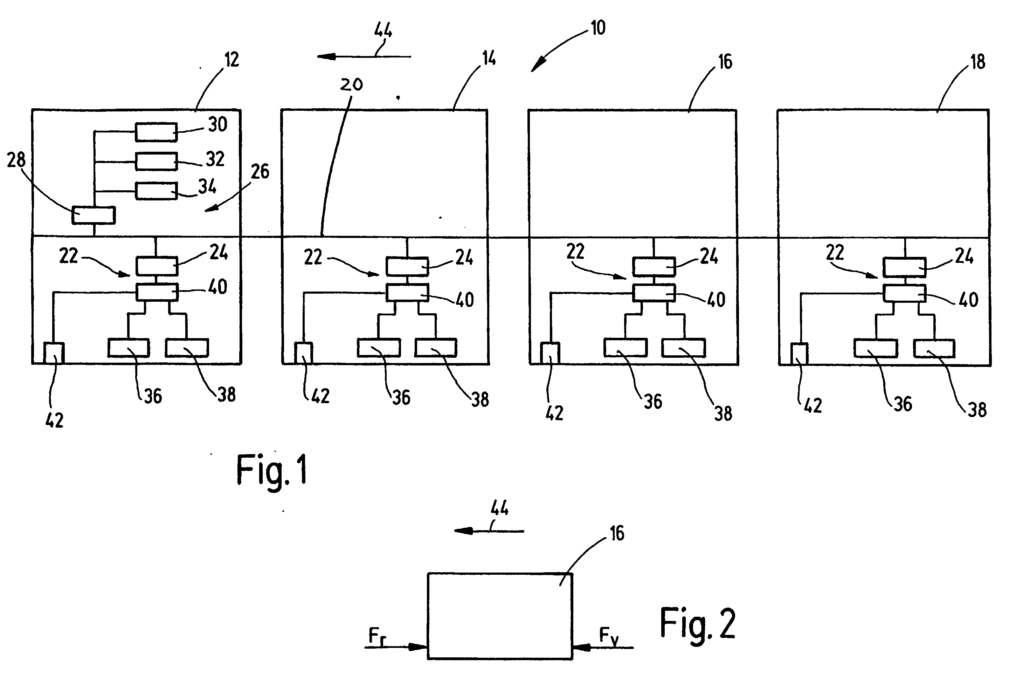

Figur 1 zeigt schematisch einen Zug 10. Der Zug 10 umfasst ein Triebfahrzeug 12 und Fahrzeuge 14, 16 und 18. Die Darstellung ist selbstverständlich lediglich beispielhaft. So kann nach weiteren Ausführungsbeispielen die Konfiguration des Zuges 10 anders gewählt sein. So können beispielsweise auch mehr als ein Triebfahrzeug 12 und weniger oder mehr als drei Fahrzeuge 14, 16 oder 18 vorgesehen sein.

Zur Kommunikation innerhalb des Zuges 10 ist ein Zugbus 20 vorgesehen. Der Zugbus 20 kann beispielsweise ein leitungsgebundener Zugbus, CAN-Bus oder ein Funkbus oder dergleichen sein. An den Zugbus 20 sind Fahrzeugbussysteme 22 angeschlossen. Die Kopplung zwischen dem Zugbus 20 und den Fahrzeugbussystemen 22 erfolgt jeweils über ein Gateway 24. Das Triebfahrzeug 12 umfasst eine weiteres Fahrzeugbussystem 26, das über ein Gateway 28 ebenfalls mit dem Zugbus 20 verbunden ist. Das Fahrzeugbussystem 26 übernimmt eine Masterfunktion für die Steuerung und Führung des Zuges 10, während die Fahrzeugbussysteme 22 eine Slavefunktion für den Zug 10 ausüben. Über das Fahrzeugbussystem 26 sind stellwerterzeugende Systemkomponenten 30, 32, 34 an den Zugbus 20 gekoppelt, während über die Fahrzeugbussysteme 22 stellwertumsetzende Systemkomponenten 36, 38 an den Zugbus 20 gekoppelt sind. Die stellwertumsetzenden Systemkomponenten 36 und 38 sind beispielsweise Antriebssysteme und Bremssysteme. Gemäß dem dargestellten Ausführungsbeispiel besitzt jedes Fahrzeug des Zuges 10 Antriebssysteme 36 und Bremssysteme 38. Hierbei ist von einem sogenannten verteilten Antriebssystem beziehungsweise verteilten Bremssystem innerhalb des Zuges 10 auszugehen. Das heißt, während einer Beschleunigung beziehungsweise Abbremsung des Zuges 10 wird die Antriebskraft beziehungsweise die Bremskraft in jedem der Fahrzeuge 12, 14, 16, 18 mit einem entsprechenden prozentualen Anteil an der Gesamtenantriebskraft beziehungsweise Gesamtbremskraft aufgebracht.

Die stellwerterzeugenden Systemkomponenten 30, 32, 34 sind beispielsweise Bedienelemente eines Triebfahrzeugführers, ein elektronischer Copilot und Kommunikationseinrichtungen zur Vorgabe von Sollwerten für die Antriebssysteme 36 beziehungsweise die Bremssysteme 38.

Jedem Fahrzeug 12, 14, 16 und 18 ist ein Längsführungsregler 40 zugeordnet. Die Längsführungsregler 40 sind einerseits über die Gateways 24 mit dem Zugbus 20 und andererseits mit den Antriebseinrichtungen 36 beziehungsweise Bremseinrichtungen 38 verbunden. Ferner sind den Längsführungsreglern 40 wenigstens eine, in der Regel zwei Messeinrichtungen 42 zugeordnet. Die Messeinrichtungen 42 sind jeweils an den Enden der Fahrzeuge 12, 14, 16 und 18 angeordnet. In Figur 1 ist jeweils eine Messeinrichtung 42 pro Fahrzeug dargestellt, das in angenommener Fahrtrichtung 44 des Zuges 10 jeweils vorne an den Fahrzeugen 12, 14, 26 und 18 angeordnet ist. Die Messeinrichtungen 42 sind Beschleunigungsmesser, mittels denen die Beschleunigung der Fahrzeuge 12, 14, 16, 18 über Grund - also dem Fahrweg - ermittelbar sind.

Die in Figur 1 allgemein dargestellte Traktionssteuerung des Zuges 10 erfolgt folgendermaßen:

Von einem Fahrzeugführer oder einem elektronischen Copiloten wird über die Systemkomponenten 30, 32, 34 bestimmt, ob der Zug beschleunigt oder abgebremst werden soll. Die entsprechenden Signale werden über den Zugbus 20 den einzelnen Fahrzeugbussystemen 22 übermittelt. Die Längsführungsregler 40 erhalten die Sollwertvorgaben und bilden entsprechende Steuersignale für die Antriebssysteme 36 beziehungsweise die Bremssysteme 38. Die Vorgaben über das die Masterfunktion innehabende Fahrzeugbussystem 26 erfolgen hierbei als positive oder negative Beschleunigungsvorgaben, so dass der Zug 10 entsprechend beschleunigt oder abgebremst wird. Je nachdem wird über die Antriebssysteme 36 eine Antriebskraft oder über die Bremssysteme 38 eine Bremskraft generiert. Mittels der Messeinrichtungen 42 wird gleichzeitig die tatsächliche Geschwindigkeit oder Beschleunigung der einzelnen Fahrzeuge 12, 14, 16, 18 über Grund ermittelt und diese tatsächliche Geschwindigkeit oder Beschleunigung dem Längsführungsregler 40 mitgeteilt. Der Längsführungsregler 40 vergleicht die Vorgabe vom Zugmaster mit den tatsächlichen Werten und beeinflusst die Steuersignale für die Antriebseinrichtungen 36 oder die Bremseinrichtungen 38 derart, dass eventuelle Abweichungen kompensiert werden. Derartige Abweichungen sind in der Regel fahrzeugspezifisch, das heißt für jedes der Fahrzeuge 12, 14, 16, 18 unterschiedlich. Durch die fahrzeugbezogene Kompensation der Abweichungen werden alle Fahrzeuge 12, 14, 16, 18 des Zuges 10 trotz unterschiedlicher fahrzeugspezifischer Randbedingungen gleichmäßig beschleunigt beziehungsweise abgebremst. Die unterschiedlichen fahrzeugspezifischen Randbedingungen basieren auf stochastischen Einflussgrößen, wie beispielsweise Wirkungsgradschwankungen der Antriebssysteme 36 beziehungsweise der Bremssysteme 38, Schwankungen der Haftwertverhältnisse zwischen Rad und Schiene sowie Schwankungen der Reibwertverhältnisse zwischen den Bremspartnern. Diese stochastischen Einflussgrößen können durch Laufzeitunterschiede zwischen den einzelnen Fahrzeugen 12, 14, 16, 18, unterschiedliche Zuladungen zu den einzelnen Fahrzeugen 12, 14, 16, 18, unterschiedlich starke Verschleißerscheinungen oder dergleichen hervorgerufen sein. Durch die fahrzeugbezogene Kompensation dieser stochastischen Einflussgrößen jedoch, haben diese auf das Gesamtverhalten des Zuges 10 keinen Einfluss. Hierdurch wird erreicht, dass längsdynamische Kräfte zwischen den Fahrzeugen 12 und 14, den Fahrzeugen 14 und 16, den Fahrzeugen 16 und 18 beziehungsweise zwischen den Fahrzeuggruppen der Fahrzeuge 12 und 14 und den Fahrzeugen 16 und 18 jeweils Null sind.

In Figur 2 ist bespielhaft das Fahrzeug 16 gezeigt. Entsprechend der Fahrtrichtung 44 wirken auf das Fahrzeug 16 Kuppelkräfte im Verbund mit den weiteren Fahrzeugen des Zuges. Hierbei wirkt eine entgegen der Fahrtrichtung 44 gerichtete Kuppelkraft Fᵣ und eine in Fahrtrichtung 44 gerichtete Kraft Fᵥ. Durch die Längsführungsregelung des gesamten Zuges 10 sind die auf die einzelnen Fahrzeuge 16 wirkenden Kuppelkräfte Fᵣ und Fᵥ gleich groß, so dass die für das einzelne Fahrzeug resultierende Kuppelkraft idealerweise Null beträgt.

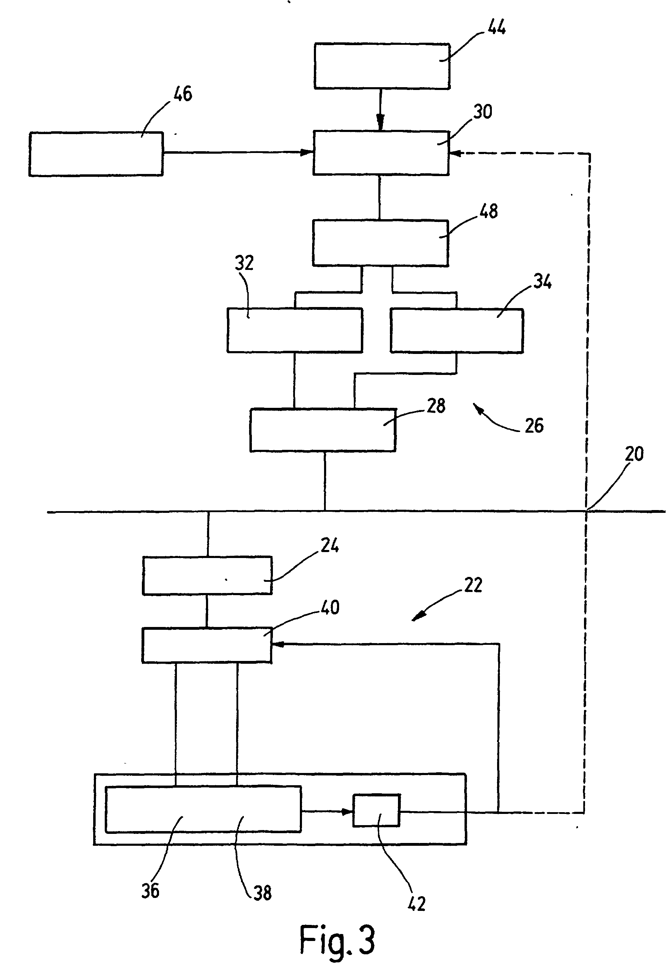

In Figur 3 ist in einem Blockschaltbild die Steuerungsstruktur der Längsführungsregelung am Beispiel des Triebfahrzeuges 12 nochmals erläutert. Gleiche Teile wie in Figur 1 sind mit gleichen Bezugszeichen versehen und nicht nochmals erläutert. Dem elektronischen Copiloten 30 sind über eine Schnittstelle 44 Vorgaben eines Triebfahrzeugführers, beispielsweise, dass der Zug 10 beschleunigen soll, der Zug 10 abbremsen soll oder dergleichen, vorgebbar. Ferner sind über ein externes Modul 46 dem Copiloten 30 unabhängig vom Triebfahrzeugführer Informationen vorgebbar, die beispielsweise ein Streckenprofil der gerade befahrenen Strecke, Informationen über einen vorausfahrenden Zug oder weitere Vorgaben betreffen. Aus den Vorgaben des Triebfahrzeugführers beziehungsweise den externen Vorgaben 46 stellt der Copilot 30 eine Sollgeschwindigkeit beziehungsweise eine Sollbeschleunigung des Zuges 10 einem Längsführungsregler 48 zur Verfügung. Dieser setzt die vom Copiloten 30 erhaltenen Informationen in Sollwertvorgaben für den Antriebsmaster 32 beziehungsweise den Bremsmaster 34 um. Über das Gateway 28 werden die Sollwertvorgaben des Antriebsmasters 32 und des Bremsmasters 34 in den Zugbus 20 eingespeist. Die Fahrzeugbussysteme 22 lesen diese Sollwertvorgaben über die Gateways 24 aus und übermitteln die Sollwertvorgaben den Längsführungsreglern 40 in den Fahrzeugen 12, 14, 16, 18. Der Längsführungsregler 40 setzt die Sollwertvorgaben des Antriebsmasters 32 beziehungsweise des Bremsmasters 34 in Steuersignale für die Antriebssysteme 36 beziehungsweise Bremssysteme 38 um. Infolge der Umsetzung der Sollwertvorgaben erfahren die Fahrzeuge 12, 14, 16 beziehungsweise 18 eine bestimmte Beschleunigung, die über die Messeinrichtungen 42 gemessen wird. Der hieraus resultierende Istwert der Geschwindigkeit beziehungsweise der Beschleunigung über Grund wird dem Längsführungsregler 40 rückgekoppelt, so dass eventuelle Abweichungen von den Sollwertvorgaben des Antriebsmasters 32 beziehungsweise des Bremsmasters 34 fortlaufend kompensiert werden.

Nach einem weiteren Ausführungsbeispiel kann vorgesehen sein, wie in Figur 3 gestrichelt dargestellt, dass die über die Messeinrichtung 42 gemessenen Istwerte der Beschleunigung oder der Geschwindigkeit des Zuges 10 dem Copiloten 30 mitgeteilt werden. Hierdurch kann zusätzlich zur Beeinflussung der Sollwertvorgaben für Antrieb und Bremse auf der Slaveebene eine Beeinflussung der Steuerung und Regelung des Zuges 10 auf der Masterebene erfolgen.

So kann beispielsweise ein automatisches Folgefahren von Zügen realisiert werden. Der Copilot 30 erhält einerseits die Istwerte des eigenen Zuges 10, das heißt die über die Messeinrichtungen 42 gemessene Beschleunigung beziehungsweise Geschwindigkeit über Grund, und andererseits die externen Vorgaben 46 eines vorausfahrenden Zuges. Bei entsprechender Ausstattung, beispiels'weise über Funkverbindungen, kann der Copilot 30 beispielsweise die für den vorausfahrenden Zug geltenden Sollvorgaben für Antrieb und Bremse erhalten. In Kenntnis dieser Werte und der Istwerte des eigenen Zuges 10 kann der Abstand und die Relativgeschwindigkeit der einanderfolgenden Züge berechnet werden. Hieraus können Vorgaben für den Längsführungsregler 48 gemacht werden, der die Sollvorgaben Antrieb beziehungsweise Bremse neu herausgibt. Anschließend werden diese Vorgaben in den einzelnen Fahrzeugen des Zuges 10 umgesetzt und dort durch die Istwerte stochastischer Einflussgrößen kompensiert. Durch eine derartige Steuerung des Zuges 10 kann ein Folgefahren von Zügen mit relativ kurzen Abständen voll automatisch realisiert werden. Ein Blockabstand lässt sich somit auf ein Minimum reduzieren. Sobald vom vorausfahrenden Zug die dort neuen Sollvorgaben dem Copiloten 30 mitgeteilt sind, kann dieser unmittelbar die Sollvorgaben für den eigenen Zug 10 korrigieren, indem er beispielsweise Beschleunigen oder Abbremsen vorgibt. Über die Schnittstelle 44 kann ein Triebfahrzeugführer selbstverständlich in den Regelkreis eingreifen.

## Patentansprüche

1. Einrichtung zur Traktionssteuerung eines Zuges (10) mit wenigstens zwei Fahrzeugen (12, 14, 16, 18), wobei der Zug (10) ein verteiltes Aktorsystem (36, 38) aufweist, mit einem Kommunikationssystem (20), an das wenigstens ein Master (26) zur Sollwertvorgabe für das verteilte Aktorsystem (36, 38) angeschlossen ist, und fahrzeugbezogenen Slavesystemen (22), über die das verteilte Aktorsystem (36, 38) die Sollwertvorgabe erhält, jedem Slavesystem (22) ein Traktionsregler (40) zugeordnet ist, dem der Sollwert vom Mastersystem (26) vorgebbar ist, und der dem jeweiligen Aktorsystem (36 oder 38) ein Steuersignal zur Umsetzung der Sollwerte liefert, wobei das Steuersignal durch wenigstens eine fahrzeugspezifische Messgröße abgleichbar ist, das Aktorsystem (36, 38) ein verteiltes Antriebssystem (36) und/oder ein verteiltes Bremssystem (38) ist, **dadurch gekennzeichnet, dass** als fahrzeugspezifische Messgröße eine gemessene Beschleunigung über Grund und/oder in und entgegengesetzt der Fahrtrichtung wirkende gemessene Kuppelkräfte (Fᵣ, Fᵥ) verwendet werden.

2. Einrichtung nach Anspruch 1, **dadurch gekennzeichnet, dass** zur Erfassung der fahrzeugspezifischen Messgröße jedes Fahrzeug (12, 14, 16, 18) wenigstens eine Messeinrichtung (42) aufweist.

3. Einrichtung nach Anspruch 2, **dadurch gekennzeichnet, dass** jedes Fahrzeug (12, 14, 16, 18) zwei Messeinrichtungen (42) aufweist, die jeweils an den Enden der Fahrzeuge (12, 14, 16, 18) angeordnet sind.

4. Einrichtung nach einem der vorhergehenden Ansprüche, **dadurch gekennzeichnet, dass** ein von den Messeinrichtungen (42) gelieferter Istwert den Traktionsreglern (40) zugeführt wird und zur Kompensation fahrzeugspezifischer stochastischer Einflussgrößen auf die Sollwertvorgabe dient.

5. Einrichtung nach einem der vorhergehenden Ansprüche, **dadurch gekennzeichnet, dass** das Mastersystem (26) einen elektronischen Copiloten (30) aufweist, der aus Vorgaben (44) eines Triebfahrzeugführers und/oder externen Vorgaben (46) die Sollvorgaben für das verteilte Aktorsystem (36, 38) liefert.

6. Einrichtung nach einem der vorhergehenden Ansprüche, **dadurch gekennzeichnet, dass** die externen Vorgaben (46) Angaben über vorausfahrende Züge beinhalten.

7. Einrichtung nach einem der vorhergehenden Ansprüche, **dadurch gekennzeichnet, dass** zwischen Fahrzeugen (12, 14, 16, 18) des Zuges (10) eine virtuelle Kupplung vorgesehen ist, bei der die Summe der längsdynamischen Kräfte zwischen aufeinanderfolgenden Fahrzeugen Null ist und durch die Umsetzung, der Sollwertvorgaben des Beschleunigungssignals in Traktionsreglern (40) gleichzeitig die einzelnen Fahrzeuge (12, 14, 16, 18) des Zuges (10) aufeinander abgestimmt ohne mechanische Kupplung beschleunigen beziehungsweise abbremsen.

## Claims

1. A traction control system for a train (10) with at least two vehicles (12, 14, 16, 18), wherein the train (10) comprises a distributed actuator system (36, 38) with a communication system (20) and at least one master (26) connected thereto in order to specify setpoints for the distributed actuator system (36, 38), as well as vehicle-specific slave systems (22), via which the distributed actuator system (36, 38) receives the specified setpoints, wherein a traction controller (40) is assigned to each slave system (22) and receives the respectively specified setpoint from the master system (26), wherein said traction controller respectively delivers a control signal for converting the setpoints to the corresponding actuator system (36 or 38) and the control signal can be compensated with at least one vehicle-specific quantity to be measured, and wherein the actuator system (36, 38) consists of a distributed drive system (36) and/or a distributed brake system (38), **characterized in that** a measured ground acceleration and/or measured coupling forces (Fn, Fv) acting in and opposite to the driving direction are utilized as the vehicle-specific quantity to be measured.

2. The device according to Claim 1, **characterized in that** each vehicle (12, 14, 16, 18) contains at least one measuring device (42) for determining the vehicle-specific quantity to be measured.

3. The device according to Claim 2, **characterized in that** each vehicle (12, 14, 16, 18) contains two measuring devices (42) that are respectively arranged on the ends of the vehicle (12, 14, 16, 18).

4. The device according to one of the preceding claims, **characterized in that** an actual value delivered by the measuring devices (42) is fed to the traction controllers (40) and used for compensating the influence of vehicle-specific stochastic variables on the specified setpoints.

5. The device according to one of the preceding claims, **characterized in that** the master system (26) comprises an electronic copilot (30) that determines the specified setpoints for the distributed actuator system (36, 38) from specifications (44) of an engineer and/or external specifications (46).

6. The device according to one of the preceding claims, **characterized in that** the external specifications (46) contain information on trains traveling ahead of the train in question.

7. The device according to one of the preceding claims, **characterized in that** a virtual coupling is provided between vehicles (12, 14, 16, 18) of a train (10), wherein the sum of the longitudinal dynamic forces between successive vehicles is zero and the individual vehicles (12, 14, 16, 18) of the train (10) accelerate and decelerate in an adapted fashion without a mechanical coupling due to a compensation of the specified setpoints of the acceleration signal in traction controllers (40).

## Revendications

1. Dispositif de commande de traction d'un train (10) comportant au moins deux véhicules (14, 14, 16, 18), le train (10) présentant un système d'acteur partagé (36, 38), un système de communication (20) auquel est raccordé au moins un maître (26) pour la prescription de valeurs théoriques pour le système d'acteur partagé (36, 38) et des systèmes asservis liés aux véhicules (22) par lesquels le système d'acteur partagé (36, 38) reçoit la prescription de valeurs théoriques, étant associé à chaque système asservi (22) un régulateur de traction (40) auquel la valeur théorique peut être prescrite par le système maître (26) et qui fournit au système d'acteur respectif (36 ou 38) un signal de commande pour la transposition des valeurs théoriques, le signal de commande pouvant être compensé par au moins une grandeur de mesure spécifique aux véhicules, le système d'acteur (36, 38) étant un système de propulsion partagé (38) et/ou un système de freinage partagé (38), **caractérisé en ce qu'**on utilise comme grandeur de mesure spécifique aux véhicules une accélération mesurée sur le terrain et/ou des forces d'attelage (Fᵣ, Fᵥ) mesurées agissant dans le sens opposé au sens de circulation.

2. Dispositif selon la revendication 1, **caractérisé en ce que**, pour enregistrer la grandeur de mesure spécifique aux véhicules, chaque véhicule (12, 14, 16, 18) présente au moins un dispositif de mesure (42).

3. Dispositif selon la revendication 2, **caractérisé en ce que** chaque véhicule (12, 14, 16, 18) présente deux dispositifs de mesure (42) qui sont disposés respectivement aux bouts des véhicules (12, 14, 16, 18).

4. Dispositif selon l'une quelconque des revendications précédentes, **caractérisé en ce qu'**une valeur réelle fournie par les dispositifs de mesure (42) est envoyée aux régulateurs de traction (40) et sert à la compensation de grandeurs d'influence stochastiques spécifiques aux véhicules sur la prescription de valeurs théoriques.

5. Dispositif selon l'une quelconque des revendications précédentes, **caractérisé en ce que** le système maître (26) présente un copilote électronique (30) qui, à partir de prescriptions (44) d'un conducteur de locomotive et/ou de prescriptions externes (46), fournit les prescriptions théoriques pour le système d'acteur partagé (36, 38).

6. Dispositif selon l'une quelconque des revendications précédentes, **caractérisé en ce que** les prescriptions externes (46) contiennent des indications sur les trains circulant devant.

7. Dispositif selon l'une quelconque des revendications précédentes, **caractérisé en ce qu'**entre les véhicules (12, 14, 16, 18) du train (10) est prévu un attelage virtuel pour lequel la somme des forces dynamiques longitudinalement entre les véhicules successifs s'élève à zéro et qu'on fait accélérer ou freiner en même temps les différents véhicules (12, 14, 16, 18) du train (10) de manière mutuellement définie sans attelage mécanique par transposition des prescriptions de valeurs théoriques du signal d'accélération dans des régulateurs de traction (40).
